# EUROPÄISCHE PATENTSCHRIFT

(11) **EP 0 343 549 B1**
(45) Veröffentlichungstag und Bekanntmachung des Hinweises auf die Patenterteilung: **24.02.1993**
(21) Anmeldenummer: 89109133.2
(22) Anmeldetag: 20.05.1989
(51) Int. Cl.: B62D 3/12

(54) **Lenkgetriebe**
Steering gear
Boîtier de direction

(30) Priorität: 20.05.1988 DE 3817335
(43) Veröffentlichungstag der Anmeldung: 29.11.1989
(73) Patentinhaber: KUNSTSTOFFVERARBEITUNG MÖSSNER GMBH & CO KG., D-92693 Eslarn (DE); FORD-WERKE AKTIENGESELLSCHAFT, 50725 Köln (DE)
(72) Erfinder: Disselhorst, Kurt, D-5650 Solingen 1 (DE); Rucha, Herbert, Prof., 8000 München 82 (DE); Wester, Rolf, 5000 Köln 1 (DE); Bauriedl, Ludwig, 8481 Eslarn / Opf. (DE)
(74) Vertreter: Baronetzky, Klaus, Dipl.-Ing.

(56) Entgegenhaltungen:
- FR-A- 2 107 780
- FR-A- 2 192 939
- GB-A- 2 154 299
- US-A- 4 008 627

## Beschreibung

Die Erfindung betrifft eine Lenkgetriebe für Kraftfahrzeuge, gemäß dem Oberbegriff von Anspruch 1, sowie ein Verfahren zu dessen Herstellung, gemäß dem Oberbegriff von Anspruch 16.

Ein derartiges Lenkgetriebe ist aus der FR-A 2 192 939 bekannt. Diese Druckschrift zeigt ein Lenkspindelgehäuse aus Kunststoff, daß zweigeteilt ist, so daß die Herstellung keine Probleme bereitet. Zur Abstützung der Lenkschubstange sind innen Rippen vorgesehen, die zugleich der Aussteifung des Gehäuses und wie auch zur Bereitstellung von Schmierkanälen dienen.

Die Herstellung dieses Gehäuses ist vergleichsweise aufwendig. Insbesondere muß für eine genaue Passung der Gehäusehälften aufeinander Sorge getragen werden, wobei sich eine sehr lange Dichtung ergibt. Bereits ein leichtes Verziehen einer der Gehäusehälften führt dazu, daß sich zwischen diesen an einer Stelle ein Spalt ergeben kann, wobei die Schmierkanäle dann nicht mehr als Schmierkanäle, sondern als Schmutzfänger dienen.

Im Falle eines Verziehens der Gehäusehälften können sich sogar die Querrippen 18a mit den Zähnen der Zahnstange verhaken, was eine Blockierungsgefahr für die Lenkung bewirkt. Diese Lösung hat sich daher nicht durchgesetzt.

Die derzeit üblicherweise verwendeten Lenkgetriebe werden vielmehr aus Aluminium-Druckguß gefertigt, wobei das eigentliche Lenkgetriebegehäuse oder Lenkspindelgehäuse als kompakte Einheit ausgebildet ist. Aus Kostengründen ist das Lenkschubstangengehäuse als einfaches Stahlrohr ausgebildet, das in einer - leicht konisch ausgeformten - Öffnung im eigentlichen Lenkgetriebegehäuse eingepreßt wird. Durch das Lenkschubstangengehäuse wie auch durch das Lenkgetriebegehäuse hindurch verläuft die Zahnstange. Die Lenkspindel erstreckt sich durch eine weitere Öffnung in das Lenkgetriebegehäuse hinein und ist bei den bekannten Lenkgetrieben durch ein Nadellager oder ein anderes Wälzlager in diesem gelagert.

Ferner ist zur Gegenabstützung der Zahnstange gegen die Lenkspindel ein sogenannter Druckstein vorgesehen, der in einer weiteren Öffnung unterhalb der Spindelöffnung eingebracht ist und auf welchem die Zahnstange gleitet. Die Drucksteinöffnung ist mit einem Deckel verschlossen, der in das Lenkgetriebegehäuse eingeschraubt oder auf dieses aufgeschraubt ist, wobei die Gewindesteigung dieses Schraubgewindes ausreichend fein gewählt ist, um eine präzise Einstellung des Lagerspiels über dem Druckstein zu ermöglichen.

Ferner ist die Zahnstange noch am Ende des Lenkschubstangengehäuses über ein Stützlager gelagert.

Dementsprechend müssen an den bekannten Lenkgetriebegehäusen umfangreiche Nachbearbeitungen vorgenommen werden, zu den neben dem Entgraten das Einbringen der Lager, das Einschneiden der Gewinde und das Einpressen der beiden Teile des Lenkgetriebes, nämlich des Lenkschubstangengehäuses in das Lenkgetriebegehäuse, gehören.

Derartige Getriebegehäuse können auch mit Rippen versehen sein, die zum einen der Stabilisierung, und zum anderen der Kühlung des Getriebes dienen sollen. Hierbei ist dann jedoch keine langgestreckte Bauweise erforderlich, wie sie bei den Lenkschubstangengehäusen konstruktiv vorgesehen ist, oder es wird bei komplexen Gehäusen mit klappbaren Preßstempeln gearbeitet, was jedoch als nachteilig, da konstruktiv aufwendig, erkannt wird.

Demgegenüber ist es Aufgabe der Erfindung, ein Lenkgetriebe gemäß dem Oberbegriff von Anspruch 1 sowie ein Verfahren zur Herstellung eines Lenkgetriebes so auszubilden, daß eine leicht bauende, konstruktiv einfache, in der Großserie rationelle Ausbildung eines Lenkgetriebegehäuses entsteht, die sich auch für eine schnelle Fertigung mit hoher Taktzahl eignet.

Diese Aufgabe wird erfindungsgemäß durch die Ansprüche 1 bzw. 16 gelöst. Vorteilhafte Weiterbildungen ergeben sich aus den Unteransprüchen.

Besonders günstig ist es, daß durch die Herstellung eines einstückigen Gehäuses sowohl für das eigentliche Lenkgetriebe als auch für das Lenkschubstangengehäuse zunächst ein Montageschritt für die Verbindung dieser beiden Gehäuse entfällt. Zudem besteht dann prinzipiell die Möglichkeit, daß das bislang üblicherweise als Nadellager ausgebildete Lager für das Lenkritzel als eingegossenes Gleitlager ausgebildet wird, und zudem ist es möglich, völlig ohne Nachbearbeitung auszukommen, indem nämlich die erforderlichen Gewinde in an sich bekannter Weise mit Hilfe von Schraubdornen verwirklicht werden.

Erfindungsgemäß besonders vorteilhaft ist die Anbringung von Anschlagflächen an dem Lenkschubstangengehäuse, die zum schnellen Entformen dienen. Hierzu werden die Formhälften des Formwerkzeugs zunächst leicht voneinander gelöst, so daß sie jedoch mit entsprechenden Gegenflächen mit den Anschlagflächen in Eingriff bleiben.

Die Elastizität des Kunststoff-Lenkschubstangengehäuses ist geringer als diejenige des Dornes, so daß durch das Lösen der Formhälften der Anpreßdruck zwischen Lenkschubstangengehäuse und Dorn gemindert und hierdurch bereits die Entformung erleichtert wird. Durch die wider die Entformungsrichtung weisenden Anschlagflächen kann der Dorn dann durch gleichzeitiges oder abwechselndes Drehen und Ziehen entformt werden. Dabei ist es günstig, wenn die Anschlagflächen ziemlich gleichmäßig um den Umfang des Lenkschubstangengehäuses, wie auch über dessen Länge verteilt, angeordnet sind.

Gemäß einer vorteilhaften Weiterbildung ist es vorgesehen, die Anschlagflächen sowohl in Tangential- als auch in Axialrichtung des Lenkschubstangengehäuses weisen zu lassen. Die tangential weisenden Anschlagflächen wirken der Verformung des beim Entformen noch vergleichsweise weichen Kunststoffkörpers während der Drehbewegung des Dornes entgegen. Entsprechendes gilt für die bei der Ziehbewegung wirkenden in Axialrichtung weisenden Anschlagflächen.

Günstig ist ferner die Materialersparnis durch das Vorsehen der Anschlagflächen. Dadurch, daß der Lenkschubstangen-Gehäusekörper beim Entformen nicht deformiert werden kann, kann mit vergleichsweise geringen Materialstärken gearbeitet werden. Hierbei ist es gemäß einer Ausführungsform der Erfindung möglich, die Anschlagflächen an gleichmäßig verteilten Noppen vorzusehen, während gemäß einer weiteren Ausführungsform Längs-und Querrippen vorgesehen sind, die zugleich zur Aussteifung im erkalteten Zustand beitragen können.

Aufgrund drehenden und ziehenden Entformung des Dornes ist es möglich, eine Hinterschneidung endseitig des Zugstangengehäuses zur Aufnahme des Stützlagers ziemlich einfach herzustellen. Es können beispielsweise Rastzungen in Auszugsrichtung sperrend ausgebildet sein, deren Sperrwirkung durch das Verdrehen des Dornes aufgehoben wird. Alternativ kommt es auch in Betracht, eine Preßpassung in dem Lenkschubstangengehäuse für das Lenkschubstangen-Stützlager vorzusehen.

Als besonders vorteilhaft hat sich die Verwendung von Kunststoffmaterialien mit mineralischen Füllkörpern, Glas oder Kohlefasern herausgestellt, die so vorbehandelt sind, daß die Hauptausrichtung ihrer Inhaltsstoffen entlang der Hauptspannungstrajektorien verläuft. Insbesondere thermoplastische Polyester wie modifiziertes Polyäthylenterephthalat (mit mehr als 30% Glasfaseranteil) eignen sich als Werkstoffe für das Lenkgetriebegehäuse. Diese Werkstoffe bieten den Vorteil, hohe Schlagzähigkeit mit hoher Festigkeit zu verbinden.

Besonders günstig ist ferner die abwechselnde Anordnung von konischen und zylindrischen Abschnitten am Innenumfang des Lenkschubstangengehäuses. Dabei ist es zweckmäßig, die konischen Abschnitte unter den Querrippen vorzusehen, während nicht von Querrippen abgedeckte Schubstangengehäusteile innen zylindrisch ausgebildet sind. Diese Ausbildung ermöglicht ein noch leichteres Entformen als eine Ausführungsform mit einer gleichmäßigen, aber entsprechend geringeren Konizität, über die gesamte Länge des Lenkschubstangengehäuses.

Besonders günstig ist es, daß die Gehäuse mit hoher Taktzahl hergestellt werden können, ohne daß viele Formwerkzeuge parallel arbeiten müßten. Die Entformung kann nämlich in noch ziemlich heißem - und damit weichem - Zustand des Gehäuses erfolgen, da der kritische Entformungsprozeß - das Ziehen des Dornes - kontrolliert erfolgt.

Weitere Einzelheiten, Merkmale und Vorteile ergeben sich aus der nachfolgenden Beschreibung eines Ausführungsbeispiels anhand der Zeichnungen.

Es zeigen:
- Fig. 1: eine teilweise geschnittene Seitenansicht eines erfindungsgemäßen Lenkgetriebegehäuses;
- Fig. 2: eine weitere, gegenüber der in Fig. 1 dargestellten Seitenansicht um 90° versetzte Darstellung eines erfindungsgemäßen Lenkgetriebegehäuses;
- Fig. 3: eine gegenüber Fig. 1 um 180° versetzte Darstellung eines Lenkgetriebegehäuses; und
- Fig. 4: einen Schnitt gemäß der Linie IV - IV in Fig. 3.

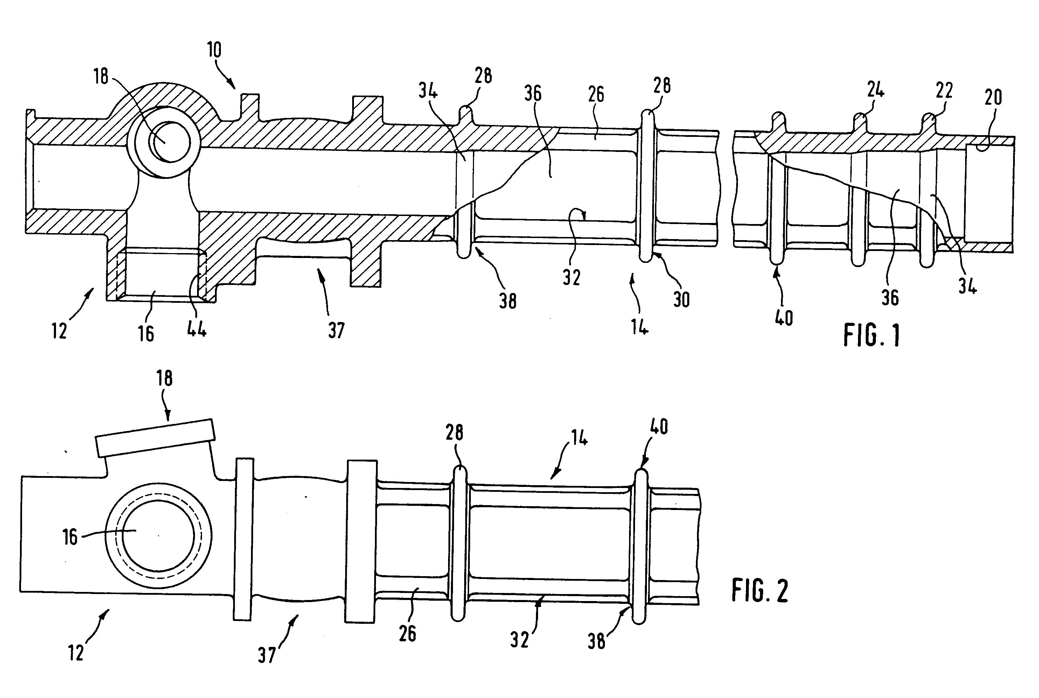

Das in Fig. 1 dargestellte Lenkgetriebe weist ein Lenkgetriebegehäuse 10 auf, das einstückig aus einem eigentlichen Lenkgetriebegehäuse oder Lenkspindelgehäuse 12 und einem Lenkschubstangengehäuse 14 besteht. Das Lenkspindelgehäuse 12 weist an seinem lenkspindelseitigen Abschnitt eine mit einem Gewinde versehene Öffnung 16 für einen sog. Druckstein auf, mit dem das Lagerspiel zwischen Lenkspindel und Lenkschubstange einstellbar ist. Ferner ist auf der axialen Höhe der Öffnung für den Druckstein eine Öffnung 18 für die Lenkspindel vorgesehen, die ausreichend dimensioniert ist, um die Aufnahme eines Lenkspindellagers zu ermöglichen. Erfindungsgemäß kann dieses Lager als eingegossenes Gleitlager aus Kunststoff ausgebildet sein. Die Wandstärke des Lenkgetriebegehäuses ist dabei so gewählt, daß der Lagerdruck von Druckstein und Lenkschubstange wie auch die auftretenden Lenkspindel-Axialkräfte abgefangen werden können. Die Lenkspindel ist dabei zusammem mit der Öffnung 18 leicht schräg zur Normalen des Lenkschubstangengehäuses 14 ausgerichtet.

Das Lenkschubstangengehäuse 14 erstreckt sich einseitig seitlich von dem Lenkspindelgehäuse 12 weg und weist an seinem von der Lenkspindel abgewandten Ende eine Lagerausnehmung 20 auf, die zur Aufnahme eines Stützlagers für die Lenkschubstange geeignet ist. Ferner sind Befestigungsflansche 22 und 24 an diesem Ende des Lenkschubstangengehäuses 14 angeformt. In dem dargestellten Ausführungsbeispiel sind zur Erzeugung der Anschlagflächen eine Mehrzahl von Längsrippen 26 und Querrippen 28 vorgesehen, wobei jede Querrippe eine axial wirkende Anschlagfläche 30 und jede Längsrippe zwei tangential wirkende Anschlagflächen 32 aufweist. Der Innendurchmesser des Lenkschubstangengehäuses 14 ist an dem lenkspindelseitigen Ende geringer als an dem stützlagerseitigen Ende, wobei zwischen den Querrippen 28 zylindrische Abschnitte 36 und unter den Querrippen 28 konische Abschnitte 34 vorgesehen sind. Ferner ist noch an dem Übergangsabschnitt zwischen Lenkschubstangengehäuse 14 und Lenkspindelgehäuse 12 ein weiterer Flansch 37 vorgesehen.

Wie sich aus dem Vergleich mit Fig. 2 ergibt, sind vier gleichmäßig um den Umfang des Lenkschubstangengehäuses 14 verteilte Längsrippen 26 vorgesehen. Die Höhe der Längsrippen 26 ist hierbei geringer als diejenige der Querrippen 28. Die Höhe der Längsrippen 26 ist jedoch so bemessen, daß bei der für das erfindungsgemäße Entformen erforderlichen teilweisen Lösung der Formwerkzeuge die Längsrippen 26 noch im Eingriff mit den Formwerkzeugen bleiben. Dies wird dadurch gewährleistet, daß die Anschlagflächen 30, 32 sich im wesentlichen senkrecht, also nicht schräg, zu dem Außenumfang des Lenkschubstangengehäuses 14 erstrecken.

Zur Verminderung der Kerbwirkung an dem Steifigkeitssprüngen zwischen den Rippen 26, 28 und den rippenfreien Abschnitten 36 des Lenkschubstangengehäuses 14 sind je Innenradien 38 vorgesehen, deren Größe jedoch so gewählt ist, daß eine ausreichend lange ebene Anschlagfläche verbleibt. Ferner können die Längs- und Querrippen 26 und 28 je mit einem endseitigen Außenradius 40 versehen sein.

Bei der erfindungsgemäßen Ausbildung der Rippen 26, 28 kann die Wandstärke der rippenfreien Abschnitte 36 des Lenkschubstangengehäuses 14 vergleichsweise gering gewählt sein, so daß beispielsweise bei einer Länge des Lenkschubstangengehäuses von 400 mm eine Wandstärke von 3 mm ausreichend ist. Ferner kann die Konizität so gewählt sein, daß der Innendurchmesser des Lenkschubstangengehäuses an dem dem Lenkspindelgehäuse benachbarten Ende 24 mm und an dem stützlagerseitigen Ende 27 mm beträgt.

Ferner ist es möglich, die Anzahl der Längs- und Querrippen 26 und 28 den konstruktiven Anforderungen entsprechend beliebig zu wählen, wobei für die Ausbildung der Anschlagflächen 30, 32 zu berücksichtigen ist, daß die Torsionsstabilität, die durch das Abstützen zwischen halb geöffnetem Formwerkzeug und fertig gegossenem Lenkschubstangengehäuse 14 erzielt wird, besser gewährleistet ist, wenn mindestens zwei Längsrippen 26 gleichmäßig um den Umfang des Lenkschubstangengehäuses 14 verteilt sind. Wenn lediglich eine Längsrippe 26 oder eine geringe Anzahl Noppen oder Vertiefungen in dem Lenkschubstangengehäuse 14 vorgesehen sind, besteht die Gefahr, daß bei der drehenden Entformung ein Verziehen an dem der einzigen Längsrippe 26 gegenüberliegenden Bereich des Lenkschubstangengehäuses 14 entsteht, das die geforderte Maßhaltigkeit des Gehäuses beeinträchtigt.

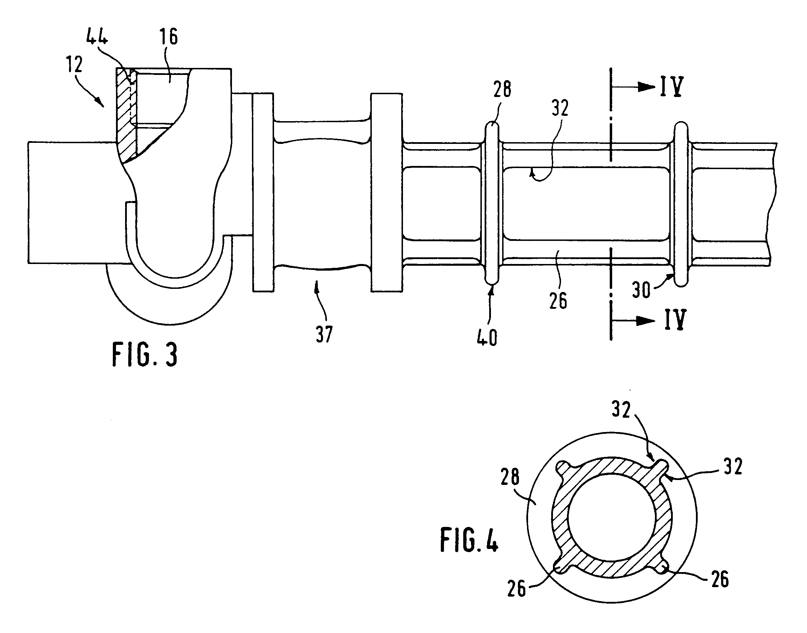

Aus Fig. 3 ist die Ausbildung des Lenkspindelgehäuses 12 in der Darstellung von unten ersichtlich. Die Öffnung 16 ist in dem Lenkspindelgehäuse 12 vorgesehen und dient zur Aufnahme eines nicht dargestellten Drucksteins zur Abstützung des Eingriffs zwischen Lenkschubstange und Lenkspindel, die ebenfalls nicht dargestellt sind. Die Öffnung 16 ist mit einem fertig gegossenen Innengewinde versehen (vgl. Fig. 1), das dadurch hergestellt wird, daß ein Schraubdorn beim Entformen des Lenkgetriebes mit der entsprechenden Gewindesteigung aus der Öffnung 16 herausgedreht wird und so ein Gewinde 44 entsteht.

Aus Fig. 4 ist ersichtlich, daß die Längsrippen 26 je Anschlagflächen 32 aufweisen, die im wesentlichen die gleiche Ausbildung wie die Anschlagflächen 30 der Querrippen 28 aufweisen. Diese exakt in Tangentialrichtung wirkenden Anschlagflächen können auch durch entsprechende Nocken oder aber durch entsprechende Vertiefungen ersetzt sein, wobei aus Stabilitätsgründen die Ausbildung von Entformungsrippen bevorzugt ist.

Mit der erfindungsgemäßen Ausgestaltung des Lenkgetriebegehäuses aus glasfaserverstärkten Kunststoffen ist die Gehäusefestigkeit derjenigen herkömmlicher Lenkgetriebegehäuse ebenbürtig. Zudem ist die Crashsicherheit erhöht, da das verwendete Material schlagzäher als Aluminiumdruckguß ist.

## Patentansprüche

1. Lenkgetriebe für Kraftfahrzeuge, mit einem aus Kunststoff bestehenden Lenkspindelgehäuse, an dem ein Lenkschubstangengehäuse angeordnet ist, dadurch gekenneichnet, daß das Lenkspindelgehäuse (12) und das Lenkschubstangengehäuse (14) einstückig ausgebildet sind und außen an dem Lenkschubstangengehäuse Längsrippen (26), Querrippen (28), Noppen und/oder Vertiefungen mit sich im wesentlichen radial erstreckenden Flächen (30, 32) angeformt sind, die als Anschlagflächen beim Entfernen des zum Gießen des Gehäuses eingesetzten Dorns des Lenksschubstangengehäuses (14) nutzbar sind.

2. Lenkgetriebe nach Anspruch 1, dadurch gekennzeichnet, daß die Anschlagflächen (30) in Längsrichtung des Lenkschubstangengehäuses (14) und insbesondere zu dessen Ende hin weisen.

3. Lenkgetriebe nach einem der Ansprüche 1 oder 2, dadurch gekennzeichnet, daß die Anschlagflächen (30, 32) an mindestens zwei am Durchmesser des Lenkschubstangengehäuses (14) einander gegenüberliegenden Stellen angeordnet sind.

4. Lenkgetriebe nach einem der vorhergehenden Ansprüche, dadurch gekennzeichnet, daß die Anschlagflächen (30, 32) mindestens eine in Axial- oder Längsrichtung des Lenkschubstangengehäuses (14) weisende Komponente und eine in Tangential- oder Querrichtung des Lenkschubstangengehäuses (14) weisende Komponente aufweisen.

5. Lenkgetriebe nach Anspruch 4, dadurch gekennzeichnet, daß die Anschlagflächen (30, 32) teils in Längsrichtung, teils in Querrichtung des Lenkschubstangengehäuses (14) weisen.

6. Lenkgetriebe nach einem der vorhergehenden Ansprüche, dadurch gekennzeichnet, daß die Anschlagflächen (30 bzw. 32) an Rippen (28 bzw. 26) ausgebildet sind.

7. Lenkgetriebe nach Anspruch 6, dadurch gekennzeichnet, daß die Rippen als entsprechend der Belastung beim Entformen verteilte Längs- (26) und/oder Querrippen (28) außen an dem Lenkschubstangengehäuse (14) ausgebildet sind.

8. Lenkgetriebe nach einem der vorhergehenden Ansprüche, dadurch gekennzeichnet, daß das Lenkspindelgehäuse (12) ein insbesondere eingegossenes Kunststofflager für die Lenkstange aufweist.

9. Lenkgetriebe nach einem der vorhergehenden Ansprüche, dadurch gekennzeichnet, daß das Lenkspindelgehäuse (12) ein gegossenes Gewinde (44) aufweist, über welches ein an sich bekannter Druckstein für die Abstützung einer Zahnstange gegenüber der Lenkspindel ein- oder anschraubbar ist.

10. Lenkgetriebe nach Anspruch 9, dadurch gekennzeichnet, daß das Gewinde (44) als Innengewinde mit einer für die Selbstsicherung geeigneten Steigung ausgebildet ist.

11. Lenkgetriebe nach einem der vorhergehenden Ansprüche, dadurch gekennzeichnet, daß ein Zahnstangen-Stützlager als insbesondere selbstschmierendes Kunststofflager in eine Lagerausnehmung (20) in dem Lenkschubstangengehäuse (14) eingebracht, insbesondere eingepreßt oder eingegossen ist.

12. Lenkgetriebe nach einem der vorhergehenden Ansprüche, dadurch gekennzeichnet, daß das Lenkschubstangengehäuse (14) innen konische Abschnitte (34) aufweist.

13. Lenkgetriebe nach Anspruch 12, dadurch gekennzeichnet, daß der Innendurchmesser des Lenkschubstangengehäuses (14) vom Lenkspindelgehäuse (12) aus zunimmt, wobei konische (34) und zylindrische Abschnitte (36) aufeinanderfolgend angeordnet sind.

14. Lenkgetriebe nach Anspruch 13, dadurch gekennzeichnet, daß die konischen Abschnitte (34) unter den Querrippen (28) vorgesehen sind.

15. Lenkgetriebe nach einem der vorhergehenden Ansprüche, dadurch gekennzeichnet, daß der Kunststoff als in an sich bekannter Weise mit Glas- oder Kohlefasern verstärkter Kunststoff extrudiert ist.

16. Verfahren zur Herstellung eines Lenkgetriebes für Kraftfahrzeuge, dadurch gekennzeichnet, daß eine mindestens zweiteilige gemeinsame Lenkspindelgehäuse/Lenkschubstangengehäuse-Form ausgegossen wird, wobei im Bereich des Lenkschubstangengehäuses ein Dorn eingesetzt wird, daß beim Entformen die mindestens zweiteilige Form mindestens im Bereich des Lenkschubstangengehäuses so weit gelöst wird, daß noch Anschlagflächen zwischen Form und Formling in Eingriff bleiben und daß dann der Dorn durch gleichzeitiges oder abwechselndes Drehen und Ziehen entformt wird und dann das Gehäuse vollständig entformt wird.

17. Verfahren nach Anspruch 16, dadurch gekennzeichnet, daß die Anschlagsflächen als Entformungsstütz- bzw. -widerlagerflächen (30, 32) verwendet werden.

18. Verfahren nach einem der Ansprüche 16 oder 17, dadurch gekennzeichnet, daß der Kunststoff in an sich bekannter Weise mit Glas- oder Kohlefasern verstärkt extrudiert wird.

## Claims

1. A steering gear for motor vehicles, with a steering shaft housing of plastics material, on which is mounted a steering push rod housing, characterised in that the steering shaft housing (12) and the steering push rod housing (14) are formed in one piece and longitudinal ribs (26), transverse ribs (28), projections and/or recesses with substantially radially extending surfaces (30,32) are formed on the outside of the steering push rod housing, which surfaces can be used as stop surfaces during the removal of the mandrel of the steering push rod housing (14) used for the casting of the housing.

2. A steering gear according to Claim 1, characterised in that the stop surfaces (30) face in the longitudinal direction of the steering push rod housing (14) and, in particular, towards the end thereof.

3. A steering gear according to either of Claims 1 or 2, characterised in that the stop surfaces (30,32) are arranged in at least two positions situated opposite each other on the diameter of the steering push rod housing (14).

4. A steering gear according to any one of the preceding Claims, characterised in that the stop surfaces (30, 32) have at least one component facing in the axial or longitudinal direction of the steering push rod housing (14) and one component facing in the tangential or transverse direction of the steering push rod housing (14).

5. A steering gear according to Claim 4, characterised in that the stop surfaces (30,32) face partly in the longitudinal direction and partly in the transverse direction of the steering push rod housing (14).

6. A steering gear according to any one of the preceding Claims, characterised in that the stop surfaces (30 and 32) are formed on ribs (28 and 26 respectively).

7. A steering gear according to Claim 6, characterised in that the ribs are formed as longitudinal ribs (26) and/or transverse ribs (28), spaced apart in accordance with the loading during the removal from the mould, on the outside of the steering push rod housing (14).

8. A steering gear according to any one of the preceding Claims, characterised in that the steering shaft housing (12) has a plastics bearing, in particular integrally cast, for the steering shaft.

9. A steering gear according to any one of the preceding Claims, characterised in that the steering shaft housing (12) has a cast thread (44), by way of which a pressure block known per se can be screwed in or on for supporting a rack opposite the steering shaft.

10. A steering gear according to Claim 9, characterised in that the thread (44) is formed as an internal thread with a pitch suitable for self-locking.

11. A steering gear according to any one of the preceding Claims, characterised in that a rack step bearing is inserted, in particular pressed in or integrally cast, as a plastics bearing, in particular self-lubricating, into a bearing recess (20) in the steering push rod housing (14).

12. A steering gear according to any one of the preceding Claims, characterised in that the steering push rod housing (14) has tapered portions (34) on the inside.

13. A steering gear according to Claim 12, characterised in that the internal diameter of the steering push rod housing (14) increases from the steering shaft housing (12), tapered portions (34) and cylindrical portions (36) being arranged in succession.

14. A steering gear according to Claim 13, characterised in that the tapered portions (34) are provided below the transverse ribs (28).

15. A steering gear according to any one of the preceding Claims, characterized in that the plastics material is extruded in a manner known per se as a plastics material reinforced with glass fibres or carbon fibres.

16. A method of producing a steering gear for motor vehicles, characterised in that a common mould in at least two parts is used for casting a steering shaft housing/steering push rod housing, a mandrel being inserted in the vicinity of the steering push rod housing, in that during the removal from the mould the mould, which is in at least two parts, is released at least in the vicinity of the steering push rod housing to such an extent that stop surfaces still remain in engagement between the mould and the moulded article, and in that the mandrel is then removed from the mould by simultaneous or alternate twisting and withdrawal and the housing is completely removed from the mould.

17. A method according to Claim 16, characterised in that the stop surfaces are used as mould-removal support or abutment surfaces (30,32).

18. A method according to one of Claims 16 or 17, characterised in that the plastics material is extruded reinforced in per se known manner with glass or carbon fibres.

## Revendications

1. Boîtier de direction pour véhicules à moteur comprenant un boîtier d'arbre de direction réalisé en matière plastique, sur lequel est disposé un boîtier de levier de direction, caractérisé en ce que le boîtier de l'arbre de direction (12) et le boîtier du levier de direction (14) sont conçus d'un seul tenant et des nervures longitudinales (26), des rainures transversales (28) des saillies et/ou des creux avec des surfaces (30, 32) s'étendant de manière sensiblement radiale sont formés à l'extérieur sur le boîtier du levier de direction, pour servir de surfaces d'arrêt lors du retrait, hors du boîtier du levier de direction (14), du mandrin utilisé lors du moulage du boîtier.

2. Boîtier de direction selon la revendication 1, caractérisé en ce que les surfaces d'arrêt (30) sont orientées dans le sens longitudinal du boîtier du levier de direction (14) et en particulier vers l'extrémité de celui-ci.

3. Boîtier de direction selon l'une quelconque des revendications 1 ou 2, caractérisé en ce que les surfaces d'arrêt (30, 32) sont disposées en au moins deux points opposés sur le diamètre du boîtier du levier de direction (14).

4. Boîtier de direction selon l'une quelconque des revendications précédentes, caractérisé en ce que les surfaces d'arrêt (30, 32) présentent au moins une composante orientée dans le sens axial ou longitudinal du boîtier du levier de direction (14) et une composante dans le sens tangentiel ou transversal du boîtier du levier de direction (14).

5. Boîtier de direction selon la revendication 4, caractérisé en ce que les surfaces d'arrêt (30, 32) sont orientées en partie dans le sens longitudinal et en partie dans le sens transversal du boîtier du levier de direction (14).

6. Boîtier de direction selon l'une quelconque des revendications précédentes, caractérisé en ce que les surfaces d'arrêt (30 ou 32) sont formées sur des nervures (26 ou 28).

7. Boîtier de direction selon la revendication 6, caractérisé en ce que les nervures sont conformées comme des nervures longitudinales (26) et/ou transversales (28) réparties à l'extérieur sur le boîtier du levier de direction (14) en fonction de la contrainte au démoulage.

8. Boîtier de direction selon l'une quelconque des revendications précédentes, caractérisé en ce que le boîtier de l'arbre de direction (12) présente un palier en matière plastique, en particulier coulé en même temps pour la barre de direction.

9. Boîtier de direction selon l'une quelconque des revendications précédentes, caractérisé en ce que le boîtier de l'arbre de direction (12) présente un filet (44) moulé, dans ou sur lequel peut être vissé un coussinet de pression connu en soi pour le soutien d'une crémaillère vis-à-vis de l'arbre de direction.

10. Boîtier de direction selon la revendication 9, caractérisé en ce que le filet (44) est conçu comme un filet intérieur avec un pas approprié pour être indesserrable.

11. Boîtier de direction selon l'une quelconque revendications précédentes, caractérisé en ce qu' un palier d'appui de la crémaillère est introduit sous la forme d'un palier en matière plastique auto-lubrifiant dans un évidement de support (20) dans le boîtier du levier de direction (14), en particulier sous pression ou moulé.

12. Boîtier de direction selon l'une quelconque des revendications précédentes, caractérisé en ce que le boîtier du levier de direction (14) présente à l'intérieur des sections coniques (34).

13. Boîtier de direction selon la revendication 12, caractérisé en ce que le diamètre intérieur du boîtier du levier de direction (14) augmente à partir du boîtier de l'arbre de direction (12), des sections coniques (34) et cylindriques (36) étant disposées à la suite les unes des autres.

14. Boîtier de direction selon la revendication 13, caractérisé en ce que les sections coniques (34) sont prévues en-dessous des nervures transversales (28).

15. Boîtier de direction selon l'une quelconque des revendications précédentes, caractérisé en ce que la matière plastique est extrudée de manière connue en soi sous forme de matière plastique renforcée de fibres de verre ou de carbone.

16. Procédé de fabrication d'un boîtier de direction pour véhicules à moteur, caractérisé en ce qu'un moule de boîtier d'arbre de direction et de boîtier de levier de direction commun en deux parties au moins est rempli, un mandrin étant introduit dans le secteur du boîtier de l'arbre de direction, en ce que lors du démoulage le moule en deux parties au moins est desserré dans le secteur du boîtier du levier de direction jusqu'à ce que des surfaces d'arrêt restent encore en prise entre le moule et la pièce moulée et en ce que le mandrin est ensuite démoulé par rotation et traction simultanées ou alternées et le boîtier est ensuite entièrement démoulé.

17. Procédé selon la revendication 16, caractérisé en ce que les surfaces d'arrêt sont utilisées comme surfaces de soutien ou de contre-appui pour le démoulage (30, 32).

18. Procédé selon l'une quelconque des revendications 16 ou 17 , caractérisé en ce que la matière plastique est extrudée de manière connue en soi avec un renfort de fibres de verre ou de carbone.
